# EUROPÄISCHE PATENTANMELDUNG

(11) **EP 4 641 843 A2**
(43) Veröffentlichungstag der Anmeldung: **29.10.2025**
(21) Anmeldenummer: 25159809.0
(22) Anmeldetag: 25.02.2025
(51) Int. Cl.: H01R 13/52, H01R 13/506, H01R 25/14

(54) **ANSCHLUSSKOMPONENTE FÜR EINE STROMSCHIENENANORDNUNG, ELEKTRISCHE VER-BINDUNGSLEITUNG FÜR EIN FAHRZEUG SOWIE VERFAHREN ZUR HERSTELLUNG EINER SOLCHEN ANSCHLUSSKOMPONENTE UND VERBINDUNGSLEITUNG**

(30) Priorität: 06.03.2024 DE 102024202117
(71) Anmelder: LEONI Bordnetz-Systeme GmbH, 97318 Kitzingen (DE)
(72) Erfinder: ALBERT, Volker, 97337 Dettelbach (DE); BUSCH, Denis, 97348 Rödelsee (DE); FLENNERT, Sebastian, 97348 Rödelsee (DE); KAIN, Stefan, 97273 Kürnach (DE)
(74) Vertreter: FDST Patentanwälte

(57) **Zusammenfassung**

Die Erfindung betrifft eine Anschlusskomponente (16) mit einem Anschlussgehäuse (18) in das zumindest eine Stromschiene (8) abgedichtet durch eine Einführöffnung (28) eingeführt ist, wobei das Anschlussgehäuse (18) entlang einer horizontalen Teilungsebene in einen Deckel (18B) und ein Aufnahmeteil (18A) unterteilt ist, wobei in der Einführöffnung (28) ein geteiltes Dichtelement (30) einliegt, welches einen Deckelabschnitt (30B) sowie einen Aufnahmeabschnitt (30A) aufweist. Hierdurch ist in beiden Fällen eine einfache Montage bei guter Abdichtung erreicht. Die Erfindung betrifft weiterhin eine elektrische Verbindungsleitung (2) die unterteilt ist in einen starren Abschnitt (4) mit einer starren Stromschiene (8) und einen flexiblen Abschnitt (8) mit einer flexiblen Leitung (10), die an einer Verbindungsstelle (12) miteinander verbunden ist, wobei die Verbindungsstelle (12) in einem freien Innenraum eines mehrteiligen Gehäuse (14) abgedichtet eingehaust ist.

## Beschreibung

Die Erfindung betrifft eine Anschlusskomponente für eine Stromschienenanordnung mit zumindest einer sich in einer Längsrichtung erstreckenden Stromschiene, wobei die Anschlusskomponente ein Anschlussgehäuse mit zumindest einer Einführöffnung für die zumindest eine Stromschiene aufweist, durch die die zumindest eine Stromschiene im montierten Zustand abgedichtet eingeführt ist.

Die Erfindung betrifft weiterhin eine elektrische Verbindungsleitung für ein Fahrzeug zur elektrischen Verbindung zweier elektrischer Komponenten, wobei die Verbindungsleitung unterteilt ist in einen starren Abschnitt mit zumindest einer starren Stromschiene und einen flexiblen Abschnitt mit zumindest einer flexiblen Leitung wobei eine jeweilige Stromschiene an einer Verbindungsstelle mit genau einer jeweiligen Mantelleitung elektrisch verbunden ist.

Die Erfindung betrifft weiterhin ein Verfahren zur Herstellung einer solchen Anschlusskomponente bzw. einer solchen Verbindungsleitung .

Eine solche Verbindungsleitung sowie eine solche Anschlusskomponente sind beispielsweise aus der US 2023/0299512 A1 zu entnehmen. Die darin beschriebene Verbindungsleitung ist als eine zweiadrige Gleichstromleitung ausgebildet und dient zur Verbindung einer elektrischen Ladedose am Kraftfahrzeug mit einer Batterie. Im Bereich der Ladedose weist diese Verbindungsleitung zwei als Flachschienen ausgebildete Stromschienen auf, welche durch eine Ringdichtung abgedichtet in ein Gehäuse der Ladedose eingeführt werden. An die jeweilige Stromschiene ist jeweils eine einadrige flexible Mantelleitung angeschlossen. Im Verbindungsbereich zwischen der Stromschiene und der Mantelleitung ist eine Ummantelung angebracht. Zur Isolierung und Abdichtung solcher Verbindungsbereiche werden üblicherweise Schrumpfschläuche oder Umspritzungen oder dergleichen eingesetzt.

Aus der DE 10 2019 129 229 A1 ist eine weitere solche Verbindungsleitung zu entnehmen, die ebenfalls zur Verbindung einer Ladedose mit einer Batterie ausgebildet ist. Die endseitig an der Verbindungsleitung angebrachten Anschlusskomponente dienen also einerseits zum Anschluss an einer Ladedose bzw. sind als eine solche ausgebildet und zum anderen zum Anschluss an eine Batterie. Auch diese Verbindungsleitung weist einen durch eine starre Stromschiene gebildeten starren Abschnitt auf, an den sich in diesem Fall jedoch im Bereich der Anschlusskomponenten flexible Abschnitte in Form von flexiblen Mantelleitungen anschließen, welche schließlich an der endseitig angebrachten Anschlusskomponente angeschlossen sind.

Die Herstellung derartiger Verbindungsleitungen, speziell zwischen einer Ladedosen und einer Batterie, ist teilweise aufwendig. Weiterhin verlaufen derartige Verbindungsleitungen häufig zumindest teilweise in einem Nassbereich des Kraftfahrzeugs, müssen daher zuverlässig gegenüber Feuchtigkeit und Nässe, insbesondere auch gegenüber Spritzwasser sein. Vor allem in Verbindung mit einer möglichst einfachen Montage führt dies speziell beim Anschluss von Stromschienen an eine jeweilige Anschlusskomponente zu besonderen Anforderungen.

Ausgehend hiervon liegt der Erfindung die Aufgabe zugrunde, eine einfache Montage insbesondere einer solchen Verbindungsleitung zu ermöglichen, wobei gleichzeitig ein guter Schutz gegenüber Nässe und Spritzwasser erreicht ist.

Im Hinblick auf die Anschlusskomponente wird die Aufgabe gemäß der Erfindung gelöst durch eine Anschlusskomponente für eine Stromschienenanordnung mit zumindest einer insbesondere als Flachschiene und alternativ als Rundschiene ausgebildeten und sich in einer Längsrichtung erstreckenden Stromschiene, wobei die Anschlusskomponente ein Anschlussgehäuse mit zumindest einer Einführöffnung für die zumindest eine Stromschiene aufweist, durch die diese im montierten Zustand abgedichtet eingeführt ist.

Die Einführöffnung weist dabei eine zu einer Querschnittsfläche der Stromschiene korrespondierende Geometrie auf, weist daher insbesondere zwei gegenüberliegende, parallel zueinander verlaufende Langseiten sowie zwei diese Langseiten verbindende Kurzseiten auf. Insgesamt ist daher die Einführöffnung insbesondere rechteckförmig ausgebildet, bevorzugt mit abgerundeten Eckbereichen. Bei montierter Stromschienenanordnung verlaufen die Langseiten daher parallel zu den Flachseiten der Stromschiene.

Das Anschlussgehäuse ist entlang einer horizontalen Teilungsebene geteilt, und zwar in einen Deckel und ein Aufnahmeteil. Die horizontale Teilungsebene erstreckt sich dabei in Längsrichtung sowie senkrecht zu einer Flachseite der Flachschiene und damit senkrecht zur Längsseite der Einführöffnung. In der Einführöffnung liegt ein geteiltes Dichtelement ein, welches einen Deckelabschnitt sowie einen Aufnahmeabschnitt aufweist. Über dieses geteilte Dichtelement wird daher im montierten Zustand eine jeweilige Stromschiene abgedichtet in das Anschlussgehäuse eingeführt.

Hervorzuheben ist die horizontale Teilungsebene, die dazu führt, dass ein unterer Teilabschnitt der Einführöffnung, welcher durch den Aufnahmeabschnitt ausgebildet ist, sich in einer vertikalen Richtung und damit parallel zur Flachseite erstreckt und nach oben hin offen ist. Bei der Montage wird bei geöffnetem Anschlussgehäuse die Stromschiene von oben und damit senkrecht zur Längsrichtung in den unteren Teilabschnitt der Einführöffnung eingeführt. Die Stromschiene braucht daher gerade nicht in Längsrichtung durch eine Einführöffnung und ein Dichtelement hindurchgefädelt zu werden. Gleichzeitig ist die Stromschiene durch das geteilte Dichtelement zuverlässig abgedichtet. Für eine zuverlässige Abdichtung liegen die beiden Teile des geteilten Dichtelement im montierten Zustand und bei aufgebrachtem Deckel dichtend aneinander an.

Das Einlegen von oben in das geöffnete Gehäuse ist von besonderem Vorteil für die Montage, speziell bei Stromschienen, deren Endbereich gebogen oder abgekröpft ist und/oder an deren Ende ein Kontaktterminal angebracht, insbesondere angeschweißt ist. Bei derartigen Stromschienen wäre ein Einschieben in Längsrichtung gerade nicht möglich. Dies erlaubt daher, dass derartige Stromschienen insbesondere mit daran angebrachten Kontaktterminals zunächst vorbereitet werden und erst anschließend in das Anschlussgehäuse eingelegt werden. Bei der Montage wird dabei entsprechend auch so vorgegangen. Insbesondere erfolgt ein Verschweißen der Stromschiene mit dem Kontaktterminal außerhalb des Anschlussgehäuses. Dies ist prozesstechnisch einfacher als ein Schweißprozess innerhalb des Anschlussgehäuses.

Gemäß einer bevorzugten Ausgestaltung ist das Anschlussgehäuse entlang der horizontalen Teilungsebene asymmetrisch geteilt, sodass der Deckel flach und das Aufnahmeteil tief ausgeführt ist. Hierunter wird allgemein verstanden, dass das flache Teil eine geringere Höhe/Tiefe in Vertikalrichtung aufweist als das tiefe Teil. Durch die asymmetrische Teilung weist daher allgemein das Aufnahmeteil eine größere Tiefe auf als der Deckel. Die Unterschiede sind dabei zumindest derart gewählt, dass das Aufnahmeteil zumindest 2/3 der vertikal stehenden Flachschiene aufnimmt. In bevorzugter Ausgestaltung weist das Aufnahmeteil in Vertikalrichtung eine Tiefe (Höhe) auf, die derart bemessen ist, dass die Flachschiene im montierten Zustand vollständig aufgenommen ist. Der untere Teilabschnitt der Einführöffnung, welcher durch das Aufnahmeteil ausgebildet ist, erstreckt sich daher entlang der Flachseiten der Flachschiene insbesondere über deren gesamte Höhe in Vertikalrichtung.

Korrespondierend hierzu ist auch das geteilte Dichtelement asymmetrisch geteilt, sodass auch der Aufnahmeabschnitt des geteilten Dichtelements die Flachschiene an den Flachseiten zumindest weitgehend U-förmig umgreift, beispielsweise zumindest 2/3 der vertikal stehenden Flachschiene umgreift. Bevorzugt weist der Aufnahmeabschnitt eine Tiefe auf, die derart bemessen ist, dass die Flachseiten der Flachschiene vollständig oder nahezu vollständig (zumindest 90 % der Höhe der Flachseiten) von dem Aufnahmeabschnitt umgriffen sind.

Korrespondierend hierzu ist der Deckelabschnitt flach, also mit geringerer Tiefe/Höhe als der Aufnahmeabschnitt ausgebildet. Bevorzugt weist der Aufnahmeabschnitt in Vertikalrichtung eine deutlich größere Höhe als der Deckelabschnitt auf, beispielsweise eine zumindest um den Faktor 3 oder Faktor 5 größere Höhe. Der Deckelabschnitt weist insbesondere allenfalls eine geringfügige Einbuchtung auf, in die die Stromschiene mit einem Randabschnitt, insbesondere mit einem gerundeten Randabschnitt eintaucht.

Diese asymmetrische Teilung des geteilten Dichtelements weist mehrere Vorteile auf, wie sie insbesondere nachfolgend im Zusammenhang mit bevorzugten Weiterbildungen erläutert werden.

Gemäß einer bevorzugten Ausgestaltung ist der Deckelabschnitt ein Teilstück einer umlaufenden Deckeldichtung, welche in der Teilungsebene vollständig umlaufend zwischen Deckel und Aufnahmeteil angeordnet ist und diese gegeneinander abdichtet. Der Deckelabschnitt dichtet also nicht nur einen Bereich der Einführöffnung ab, sondern ist vielmehr Teil der größeren Deckeldichtung zwischen Deckel und Aufnahmeteil.

Aufgrund der flachen Ausgestaltung des Deckelabschnitts besteht die Möglichkeit, dass sich die gesamte umlaufende Deckeldichtung lediglich innerhalb einer Dichtungsebene erstreckt und dass daher vorzugsweise die Dicke dieser Deckeldichtung in Vertikalrichtung konstant ist. Zumindest ist die Dicke des Deckelabschnitts nicht größer als die Dicke der umlaufenden Deckeldichtung im restlichen Bereich.

Durch die Integration des Deckelabschnitts in die umlaufende Deckeldichtung ist eine zuverlässige Abdichtung des gesamten Anschlussgehäuses insbesondere auch im Bereich der geteilten Einführöffnung erreicht.

Das Anschlussgehäuse ist vorzugsweise für zwei Stromschienen ausgebildet, welche durch zwei voneinander getrennte Einführöffnungen in das Anschlussgehäuse eingeführt werden können.

In bevorzugter Ausgestaltung ist nunmehr ein gemeinsamer, W-förmiger Aufnahmeabschnitt ausgebildet, welcher die Flachseiten der beiden Stromschienen umgibt und im Mittenbereich den Trennsteg überdeckt. Unter W-förmig wird dabei verstanden, dass der Aufnahmeabschnitt zwei nebeneinander angeordnete U-förmige Teilabschnitte aufweist, die in der Mitte durch einen Verbindungssteg miteinander verbunden sind, wobei dieser Verbindungssteg einen Zwischenraum zwischen den beiden U-förmigen Abschnitten überdeckt, in dem der Trennsteg aufgenommen ist.

Auch der zugehörige Deckelabschnitt überdeckt beide Einführöffnungen gemeinsam. Er stützt sich daher auf die beiden gegenüberliegenden randseitigen Stirnabschnitte sowie auf den mittleren Verbindungssteg ab, sodass insgesamt eine zuverlässige Abdichtung erreicht ist. Der Verbindungssteg liegt weiterhin dichtend auf dem Trennsteg auf.

Im montierten Zustand, also bei geschlossenem Anschlussgehäuse liegen die beiden Teile des geteilten Dichtelements, also der Aufnahmeabschnitt und der Deckelabschnitt aneinander dichtend an. Jedes dieser Teile bildet daher eine Kontaktfläche aus, die auch als Dichtfläche bezeichnet wird. In bevorzugter Ausgestaltung ist die Dichtfläche an zumindest einem dieser beiden Teile konturiert ausgebildet, weist also abweichend von einer flachen und ebenen Ausgestaltung Erhebungen und Vertiefungen auf. Insbesondere weist die Dichtfläche Dichtrippen oder Dichtlippen auf. Beim Zusammenfügen werden die beiden Dichtflächen gegeneinander gepresst und greifen daher durch die konturierte Ausgestaltung zuverlässig dichtend ineinander ein.

Im Hinblick auf die elektrische Verbindungsleitung wird die Aufgabe gelöst durch eine Verbindungsleitung für ein Fahrzeug zur elektrischen Verbindung zweier elektrischer Komponenten, wobei die Verbindungsleitung unterteilt ist in einen starren Abschnitt mit zumindest einer starren Stromschiene und einen flexiblen Abschnitt mit zumindest einer flexiblen Leitung, bei der es sich insbesondere um eine flexible, einadrige Mantelleitung handelt. Deren Leiter ist typischerweise als ein Litzenleiter ausgebildet und besteht daher aus einer Vielzahl von Einzeldrähten. Genau eine jeweilige Stromschiene ist an einer Verbindungsstelle mit genau einer jeweiligen flexiblen Leitung an einer Verbindungsstelle verbunden. Bei der flexiblen Leitung handelt es sich üblicherweise um eine Rundleitung. Die starre Stromschiene weist im Unterschied hierzu bevorzugt einen rechteckförmigen Querschnitt auf. Alternativ weist die Stromschiene einen runden Querschnitt auf. Der Leiter der Stromschiene ist üblicherweise als ein massiver Metallleiter, beispielsweise aus Aluminium oder aus Kupfer ausgebildet.

Bevorzugt weisen sowohl die zumindest eine Stromschiene als auch die zumindest eine flexible Leitung einen Isolationsmantel auf. Die Stromschiene weist daher einen zentralen, insbesondere massiven Leiter auf, welcher von dem Isolationsmantel umgeben ist.

Es ist hier also eine direkte, unmittelbare 1:1-Verbindung ohne weitere Abzweige und auch ohne weitere Bauteile ausgebildet. An der Verbindungsstelle sind die Leiter der starren Stromschiene und der flexiblen Leitung elektrisch miteinander verbunden und zwar insbesondere durch ein Fügeverfahren speziell durch (Ultraschall-) Schweißen. Grundsätzlich bestehen auch andere Verbindungsmöglichkeiten, wie beispielsweise eine Schraubverbindung. Am Ende der flexiblen Leitung ist hierbei typischerweise ein Terminal angebracht, welches häufig eine starres Flachmetall aufweist, welches flach auf der Stromschiene aufliegt und mit dieser insbesondere durch Schweißen verbunden ist.

Im Unterschied zu den bekannten Verbindungsleitungen, bei denen im Verbindungsbereich eine Ummantelung beispielsweise in Form eines Schrumpfschlauches oder einer Umspritzung aufgebracht ist, ist vorliegend nunmehr vorgesehen, dass die Verbindungsstelle in einem freien Innenraum eines mehrteiligen Gehäuses abgedichtet eingehaust ist. Die zumindest eine Stromschiene sowie zumindest eine flexible Leitung sind jeweils einzelweise mithilfe eines jeweiligen Dichtelements abgedichtet in das Gehäuse und zur Verbindungsstelle geführt. Insbesondere sind sie jeweils mit ihrem Isolationsmantel abgedichtet in das Gehäuse eingeführt. Aufgrund der Mehrteiligkeit weist das Gehäuse zumindest zwei Gehäuseteile auf, die miteinander verbindbar und im montierten Zustand verbunden sind. Unter freier Innenraum wird vorliegend verstanden, dass dieser hohl ist und z.B. nicht mit einer Dichtmasse gefüllt ist. In einer Ausführungsvariante ist das Gehäuse durch genau zwei Gehäuseteile gebildet. Innerhalb des mehrteiligen Gehäuses liegen ggf. die Dichtelemente als separate Bauteile ein, die alternativ auch einstückige Bestandteile eines jeweiligen Gehäuseteils sein können.

Bei der Herstellung wird dabei derart vorgegangen, dass zunächst die beiden Gehäuseteile einerseits auf die Stromschiene und andererseits auf die flexible Leitung aufgeschoben werden und zwar zusammen mit dem jeweilige Dichtelement. Erst anschließend erfolgt die Verbindung, insbesondere Schweißverbindung zwischen Stromschiene und flexibler Leitung. Nachfolgend werden die beiden Gehäuseteile zusammengeschoben und miteinander verbunden.

Durch die Verwendung eines derartigen mehrteiligen Gehäuses, in das die Stromschiene sowie flexible Leitung dichtend eingeführt sind, ist daher der Montageprozess verändert und vereinfacht. Speziell ist beispielsweise nachfolgend zur Verbindung kein aufwendiger Dichtprozess für die Verbindungsstelle erforderlich. Es erfolgt lediglich ein Zusammenschieben der Gehäuseteile.

Die Verbindungsleitung ist insbesondere als eine Gleichstromleitung ausgebildet. Sie weist in bevorzugter Ausgestaltung mehrere und zwar insbesondere genau zwei starre Stromschienen sowie zwei flexible Leitungen auf, die jeweils an einer 1:1-Verbindung und an einer jeweiligen Verbindungsstelle miteinander verbunden sind. Jede dieser Verbindungsstellen ist in bevorzugter Ausgestaltung jeweils in einem solchen zuvor beschriebenen mehrteiligen Gehäuse angeordnet. Jeder Verbindungsstelle ist daher individuell ein eigenes Gehäuse zugeordnet. Alternativ bestünde grundsätzlich auch die Möglichkeit, ein gemeinsames Gehäuse für die mehreren Stromschienen und Leitungen vorzusehen. Die Montage und Flexibilität im Hinblick auf die Positionierung der individuellen einzelnen Gehäuse ist jedoch durch die Verwendung dieser eigenen Gehäuse erhöht. So sind die beiden Gehäuse je nach Raumanforderungen beispielsweise versetzt zueinander angeordnet. Bevorzugt dient die insbesondere zweiadrige Verbindungsleitung zur elektrischen Verbindung zwischen genau zwei Komponenten.

Bei der Verbindung zwischen der jeweiligen Stromschiene und der flexiblen Leitung handelt es sich um eine direkte, unmittelbare leitende Verbindung zwischen deren beiden elektrischen Leitern. In dem jeweiligen Gehäuse sind daher - abgesehen von den Dichtelementen, den darin einliegenden Teilabschnitten der Verbindungsleitung und gegebenenfalls erforderlichen Komponenten zur Ausbildung der elektrischen Verbindung (beispielsweise Schraubklemmen) - auch keine weiteren Bauteile, insbesondere elektrischen Bauteile wie beispielsweise Sicherungen, Verteilerschienen usw. vorhanden. Wie weiterhin bereits erwähnt ist der Innenraum des Gehäuses frei, d. h. es ist auch keine Dichtmasse, wie z.B. eine Gussmasse oder dergleichen eingebracht, sodass die Verbindungsstelle insgesamt insbesondere unvergossen ist. Die Abdichtung erfolgt daher ausschließlich über die Dichtelemente und über das jeweilige Gehäuse.

Das jeweilige Gehäuse ist in bevorzugter Ausgestaltung entlang einer vertikalen Teilungsebene in die beiden genannten Gehäuseteile unterteilt, wobei zwischen diesen eine umlaufende Gehäusedichtung angeordnet ist. Über diese Gehäusedichtung ist eine zuverlässige Abdichtung zwischen den beiden Gehäuseteilen erreicht. Unter vertikaler Teilungsebene wird eine Ebene verstanden, welche senkrecht zu einer Längsrichtung ist, entlang derer sich die Verbindungsleitung im Verbindungsbereich erstreckt. Die Teilungsebene verläuft daher senkrecht zur Erstreckungsrichtung der Stromschiene sowie der flexiblen Leitung. Diese sind daher jeweils an einer Stirnseite des jeweiligen Gehäuseteils durch eine jeweilige Durchtrittsöffnung eingeführt. Die Stromschiene bzw. die flexible Leitung sind innerhalb der jeweiligen Durchtrittsöffnung über das jeweilige Dichtelement abgedichtet.

Die zuvor beschriebenen Dichtelemente zur Abdichtung der Durchtrittsöffnungen und/oder die hier beschriebene Gehäusedichtung sind gemäß einer Ausführungsvariante als separate, monolithische Dichtelemente ausgebildet, die also als separate Bauteile angebracht werden.

Gemäß einer alternativen, bevorzugten Ausführungsvariante ist zumindest eines der Dichtelemente und/oder die Gehäusedichtung ein einstückiges Bestandteil des jeweiligen Gehäuseteils. Bevorzugt sind beide Dichtelemente und bevorzugt ergänzend auch die Gehäusedichtung einstückige Bestandteile. Sie sind beispielsweise gemeinsam mit dem jeweiligen Gehäuseteil in einem Mehrkomponenten-Spritzgussverfahren, insbesondere in einem Zweikomponenten-Spritzgussverfahren ausgebildet. Die eine Materialkomponente bildet dabei das Gehäuseteil und die andere das jeweilige Dichtelement bzw. die Gehäusedichtung, die weicher ist als die Materialkomponente für das restliche Gehäuseteil. Alternativ bestehen das Gehäuseteil und die Gehäusedichtung aus dem gleichen Material.

In zweckdienlicher Weiterbildung ist im Bereich zumindest einer der Durchtrittsöffnungen eine Dichtungskappe angeordnet, welche mit dem einen Gehäuseteil verbunden ist und durch die die flexible Leitung geführt ist. Alternativ oder ergänzend ist (auch) die Stromschiene durch die / eine Dichtungskappe geführt. Bevorzugt ist das Gehäuse abschließend durch die beiden Gehäuseteile sowie diese Dichtungskappe zusammen mit den erforderlichen Dichtelementen gebildet.

Die Dichtungskappe ist insbesondere auf der Seite der flexiblen Mantelleitung ausgebildet, sie umgreift üblicherweise einen Gehäusestutzen des einen Gehäuseteils und dient insbesondere als ein Axialanschlag für das einliegende Dichtelement. Auch die Dichtungskappe wird vor dem eigentlichen Verbindungsprozess bereits auf die flexible Leitungen aufgefädelt.

Alternativ zu der Ausgestaltung mit der separaten Dichtungskappe besteht das Gehäuse ausschließlich aus den beiden genannten Gehäuseteilen zusammen mit den Dichtelementen. Die Funktion der Dichtungskappe ist hierbei beispielsweise in das eine Gehäuseteil integriert, beispielsweise durch einen integrierten Axialanschlag.

Die Verbindungsleitung ist bevorzugt als eine Hochleistung-Leitung und insbesondere als eine Batterieleitung und / oder Hochvoltleitung ausgebildet, die an ihren Endseiten jeweils eine Anschlusskomponente zum Anschluss an die jeweilige elektrische Komponente, beispielsweise eine Batterie aufweist.

Wie bereits erwähnt, weisen sowohl die zumindest eine Stromschiene als auch die zumindest eine flexible Leitung einen elektrischen Isolationsmantel auf und erstrecken sich als isolierte Stromschiene bzw. Leitung jeweils von ihrer Verbindungstelle bis zu der Anschlusskomponente. Die Stromschiene und / oder die flexible Leitung erstrecken sich dabei über eine Leitungslänge, die beispielsweise zumindest 20cm und vorzugsweise zumindest 50cm beträgt. Speziell die Länge der Stromschiene liegt beispielsweise auch über 50cm und beispielsweise über 70cm oder auch über 100cm.

Die Anschlusskomponente weist weiterhin in bevorzugter Ausgestaltung ein Anschlussgehäuse auf, in das die insbesondere isolierte Stromschiene dichtend eingeführt wird. Auch die zumindest eine flexible Leitung wird bevorzugt mit ihrem Isolationsmantel dichtend in das Anschlussgehäuse eingeführt.

Über die Anschlusskomponente ist allgemein eine Kontaktstelle bereitgestellt, über die die Verbindungsleitung mit der jeweiligen Komponenten elektrisch kontaktiert werden kann und im montierten Zustand kontaktiert ist. Die Kontaktstelle liegt dabei insbesondere im Anschlussgehäuse ein. Insbesondere liegt im Anschlussgehäuse als Kontaktstelle ein Kontaktterminal ein. Dieses ist entweder als separates Bauteil endseitig an der Stromschiene bzw. der Leitung angeschlossen oder ist beispielsweise durch ein Ende der Stromschiene gebildet.

Die Verbindungsleitung ist bevorzugt für die Übertragung einer elektrischen Leistung von mehr als 50 KW, insbesondere von mehr als 100 KW ausgebildet. Sie ist zugleich auch als eine Hochspannungsleitung ausgebildet, bei der im Betrieb eine Spannung von typischerweise mehreren 100 V bis hin zu 1000 V anliegen. Sie ist insgesamt auch zur Übertragung von Strömen von mehr als 50 A und insbesondere auch mehr als 100 A ausgebildet.

Die Verbindungsleitung weist hierzu geeignete Leiterquerschnitte auf. So weist die Stromschiene - sowohl mit rundem als auch mit rechteckförmigen Querschnitt - bevorzugt einen Leiterquerschnitt - z.B. bei Verwendung von Aluminium als Leitermaterial - im Bereich von 40 mm² - 255 mm², aber auch größer 255 mm² auf. Bevorzugt liegt der Leiterquerschnitt zumindest bei größer 120 mm². Bei der Verwendung von Kupfer liegen die entsprechenden Querschnitte typischerweise um den Faktor 1,6 kleiner und beispielsweise im Bereich von 25 mm² - 160 mm², aber auch größer als 160 mm² und bevorzugt zumindest über 75 mm². Die flexible Leitung weist einen identischen oder zumindest korrespondierenden Leiterquerschnitt wie die Stromschiene auf.

Die Verbindungsleitung ist speziell zur elektrischen Verbindung einer Batterie mit einer Ladebuchse ausgebildet. Im montierten Zustand verbindet Sie daher eine Ladebuchse mit einer Batterie, insbesondere mit einer Traktionsbatterie eines elektrisch angetriebenen Fahrzeugs (Vollelektrisch oder Hybridfahrzeug). Die beiden endseitig an der Verbindungsleitung angeschlossenen Anschlusskomponenten dienen zum Anschluss an die Batterie bzw. zum Anschluss an die Ladedose. In einer Ausführungsvariante ist die eine Anschlusskomponente bereits insgesamt als die Ladedose ausgebildet. Die Ladedose bildet eine Schnittstelle, speziell eine Ladebuchse zum Anschluss eines externen Ladekabels aus.

Die zuvor beschriebene Anschlusskomponente wird beispielsweise als eine Anschlusskomponente der zuvor beschriebenen elektrischen Verbindungsleitung mit dem starren Abschnitt und dem flexiblen Abschnitt eingesetzt.

Die Anschlusskomponente kann jedoch allgemein bei elektrischen Leitungen mit Stromschienen eingesetzt werden. Speziell auch bei elektrischen Hochleistungs-Verbindungsleitungen, wie sie zuvor definiert wurden und die nicht zwingend eine flexible Leitung aufweisen. Eine solche Verbindungsleitung weist beispielsweise lediglich zumindest eine starre Stromschiene und bevorzugt ein Stromschienen-Paar und keine flexible Leitung auf. In einer Ausführungsvariante ist die zuvor beschriebene Verbindungsleitung zwischen der Ladedose und der Batterie als eine solche Leitung ausgebildet, die durchgehend von einer starren Stromschiene und speziell durch ein Stromschienen-Paar gebildet ist. Die spezielle Anschlusskomponente, wie sie zuvor beschrieben wurde, ist beispielsweise an beiden Endseiten ausgebildet, speziell dient sie als Anschlusskomponente zum Anschließen an der Batterie.

Sowohl die Verbindungsleitung als auch die Anschlusskomponente mit dem horizontal geteilten Anschlussgehäuse weisen den besonderen Vorteil auf, dass die elektrische Verbindung
a) zwischen der flexiblen Leitung und der Stromschiene bei der Verbindungsleitung und
b) zwischen der Stromschiene und einem Kontaktterminal bei der Anschlusskomponente
in einem ersten Montageschritt vorgenommen wird und erst anschließend bei
a) das Gehäuse die Verbindungsstelle dichtend umschließt bzw. bei
b) das Anschlussgehäuse angebracht wird, indem die Stromschiene mit dem angeschlossen Kontaktterminal eingelegt wird.

Die Aufgabe, eine vereinfachte Montage bei gleichzeitig zuverlässiger Abdichtung zu ermöglichen, wird daher insbesondere auch durch ein entsprechendes Verfahren gemäß der Merkmalskombination des Anspruchs 15 gelöst.

Bei der hier beschriebenen Verbindungsleitung handelt es sich insbesondere um eine Gleichstromleitung mit insbesondere zwei Leitersträngen, einmal für den Masseanschluss und einmal für ein positives Bezugspotential, insbesondere zum Anschluss an einen Minuspol sowie Pluspol einer Batterie. Auch die beschriebene Anschlusskomponente und die daran angeschlossene Stromschienenanordnung sind insbesondere für/als eine solche Gleichstromleitung ausgebildet, bei der die beiden Stromschienen im Betrieb einerseits auf negativem Bezugspotential (Massepotenzial) sowie andererseits auf positivem Bezugspotential liegen.

Ausführungsbeispiele der Erfindung werden nachfolgend anhand der Figuren näher erläutert. Diese zeigen
- FIG 1: eine elektrische Verbindungsleitung mit einem starren Abschnitt und einem flexiblen Abschnitt,
- FIG 2: eine vergrößerte Darstellung im Verbindungsbereich zwischen dem starren Abschnitt und dem flexiblen Abschnitt mit einem Gehäuse,
- FIG 3: eine Schnittdarstellung durch den Verbindungsbereich gemäß FIG 2,
- FIG 4: eine perspektivische Darstellung einer Anschlusskomponente mit einem Anschlussgehäuse und zwei in das Anschlussgehäuse eingeführte Stromschienen,
- FIG 5: eine Aufsicht auf das Anschlussgehäuse bei geöffnetem Deckel,
- FIG 6: eine Schnittansicht durch das Anschlussgehäuse im Bereich von Eintrittsöffnungen, durch die die Stromschienen hindurchgeführt sind zur Erläuterung des geteilten Dichtelements,
- FIG 7: eine Schnittansicht durch das Anschlussgehäuse beabstandet von dem geteilten Dichtelement,
- FIG 8: eine perspektivische Darstellung des geteilten Dichtelements, mit Aufnahmeabschnitt und Deckelabschnitt, wobei letzterer als Teil einer umlaufenden Deckeldichtung ausgebildet ist,
- FIG 9: eine perspektivische Darstellung des W-förmigen Aufnahmeabschnitts gemäß FIG 8.

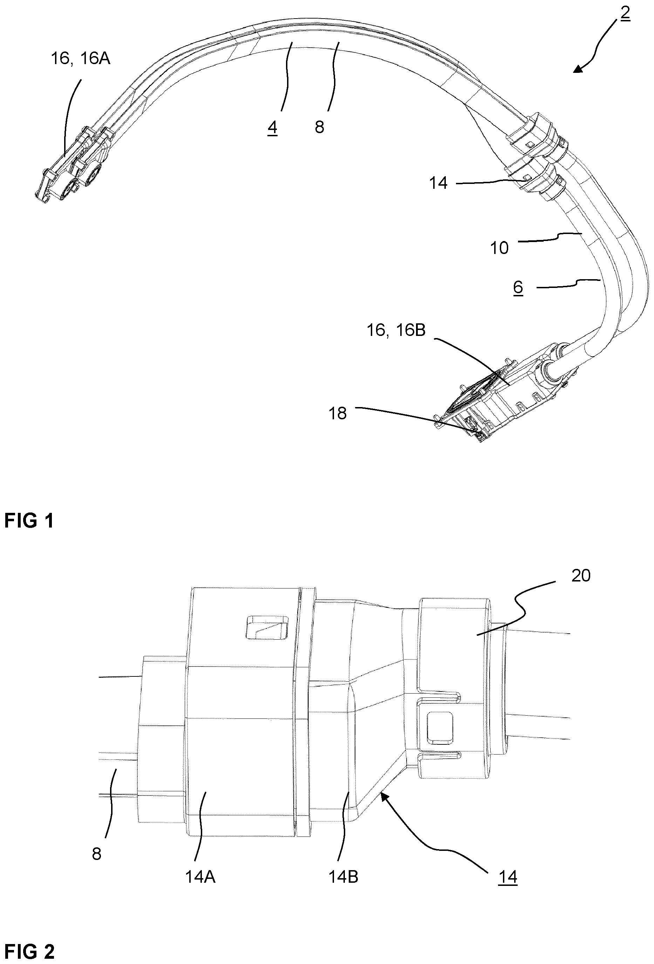

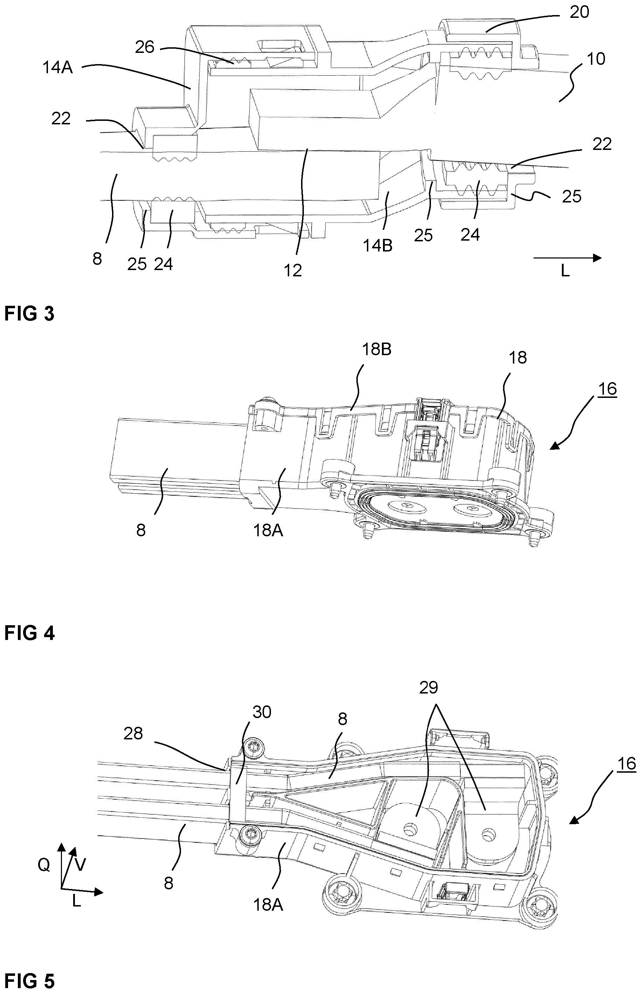

Eine in FIG 1 dargestellte Verbindungsleitung 2 weist einen starren Abschnitt 4 sowie einen flexiblen Abschnitt 6 auf. Der starre Abschnitt 4 ist durch zwei starre Stromschienen 8 gebildet und der flexible Abschnitt 6 durch zwei flexible, einadrige Leitungen 10, die insbesondere als Mantelleitung ausgebildet ist. Diese weist einen zentralen Leiter, insbesondere Litzenleiter auf, welcher von einem Isolationsmantel umgeben ist. Auch die jeweilige Stromschiene 8 weist beispielsweise einen zentralen, insbesondere massiven Flachleiter auf, welche von einem Isolationsmantel ummantelt ist. Eine jeweilige Stromschiene 8 ist allgemein als gegebenenfalls ummantelte Flachschiene und typischerweise aus massivem Metall ausgebildet. Wie zu erkennen ist, sind die Stromschienen 8 im Ausführungsbeispiel entsprechend einer späteren Verlegegeometrie gebogen ausgebildet. Eine jeweilige Stromschiene 8 ist jeweils mit einer jeweiligen Leitung 10 an einer Verbindungsstelle 12 (vergleiche hierzu insbesondere Figur 3) elektrisch und insbesondere auch mechanisch verbunden, insbesondere durch Schweißen. Die Verbindungsstelle 12 ist in einem Gehäuse 14 eingehaust, welches vergrößert in FIG 2 dargestellt ist.

An der Verbindungsleitung 2 sind jeweils an den gegenüberliegenden Endseiten Anschlusskomponenten 16 angebracht. Diese weisen jeweils ein Anschlussgehäuse 18 auf, in die eine jeweilige Stromschiene 8 bzw. eine jeweilige flexible Leitung 10 jeweils einzelweise abgedichtet eingeführt ist. Innerhalb eines jeweiligen Anschlussgehäuses 18 ist daher insbesondere eine Kontaktstelle ausgebildet, wie beispielsweise ein Kontaktterminal, über das der elektrische Anschluss der Komponente erfolgt.

Die Verbindungsleitung 2 ist insbesondere als Batterieleitung oder Ladeleitung ausgebildet und dient insbesondere zur elektrischen Verbindung einer hier nicht näher dargestellten Ladedose mit einer Batterie speziell eines elektromotorisch angetriebenen Fahrzeuges. Die Verbindungsleitung 2 ist ausgehend von einer Anschlusskomponente 16A im Bereich der Ladedose zu der batterieseitigen Anschlusskomponente 16B geführt und zwar beispielsweise entlang eines Radkastens, an dem der starre Abschnitt 4 vorgebogen entlang verläuft. Über den flexiblen Abschnitt 6 sind allgemein Ausgleichsbewegungen und/oder Montagetoleranzen ermöglicht. Im Ausführungsbeispiel der FIG 1 sind an jeder Stromschiene 8 jeweils eine Anschlusskomponente 16A mit eigenem Anschlussgehäuse 18 angebracht. Bei der batterieseitigen Anschlusskomponente 16B handelt es sich um eine gemeinsame Anschlusskomponente 16B für beide Leitungen 10, die also in ein gemeinsames Anschlussgehäuse 18 eingeführt sind.

Hervorzuheben ist, dass die Verbindungsstelle 12 in dem Gehäuse 14 abgedichtet einliegt. Das Gehäuse 14 weist hierzu zwei Gehäuseteile 14A, 14B sowie im Ausführungsbeispiel ergänzend eine Dichtungskappe 20 auf. Das Gehäuse 14 ist entlang einer vertikalen Teilungsebene in die beiden Gehäuseteile 14A, 14B unterteilt. Die Verbindungsleitung 2, speziell die jeweilige Stromschiene 8 erstreckt sich im Bereich der Verbindungsstelle 12 entlang einer Längsrichtung L. Diese bildet quasi eine Flächennormale zur vertikalen Teilungsebene.

Die beiden Gehäuseteile 14A sowie 14B sind im Ausführungsbeispiel über eine Rastverbindung miteinander verrastet. Auch die Dichtungskappe 20 ist an dem einen Gehäuseteil 14B über eine Rastverbindung befestigt. Die flexible Leitung 10, die üblicherweise einen kreisrunden Querschnitt aufweist, ist durch die Dichtungskappe 20 hindurchgeführt.

Wie insbesondere auch im Zusammenhang mit der Längsschnitt-Darstellung gemäß FIG 3 erkennbar ist, weist ein jeweiliges Gehäuseteil 14A, 14B jeweils eine Durchtrittsöffnung 22 auf, durch die die jeweilige Stromschiene 8 bzw. Leitung 10 unter Zwischenlage eines Dichtelements 24 abgedichtet eingeführt ist. Bei dem Dichtelement 24 handelt es sich jeweils um eine umlaufende Ringdichtung, mit typischerweise kreisrundem Querschnitt im Fall der flexiblen Leitung 10 und mit einem an die Flachschiene angepassten rechteckförmigen Querschnitt im Fall der Stromschiene 8. Die Dichtelemente 24 sind beispielsweise als einstückige Bestandteile des jeweiligen Gehäuseteils 14A, 14B ausgebildet und mit diesen insbesondere in einem Mehrkomponenten-Spritzgussverfahren erzeugt.

Im Verbindungsbereich sind die beiden Gehäuseteile 14A, 14B ineinandergesteckt und überlappen sich daher in Längsrichtung L ein Stück weit. In diesem überlappenden Abschnitt liegt zwischen den beiden Gehäuseteilen 14A, 14B eine Gehäusedichtung 26 ein, welche die beiden Gehäuseteile 14A, 14B zueinander abdichtet. Durch die Dichtelemente 24 sowie die Gehäusedichtung 26 ist insgesamt die Verbindungsstelle 12 zuverlässig abgedichtet.

Der Leiter der Stromschiene 8 ist mit dem Leiter der Leitung 10 verbunden und zwar insbesondere durch Schweißen. Endseitig weist die Leitung 10 hierzu üblicherweise ein beispielsweise angeschweißtes Anschlussterminal auf, welches ebenfalls ein Verbindungsstück nach Art einer Flachschiene aufweist.

Außer den beschriebenen und in FIG 3 dargestellten Komponenten sind innerhalb des Gehäuses 14 keine weiteren Komponenten angeordnet und insbesondere ist das Gehäuse 14 auch nicht mit Gussmasse/Dichtmaterial ausgefüllt oder mit einer weiteren Ummantelung umgeben.

Bei der Montage wird derart vorgegangen, dass zunächst ein jeweiliges Gehäuseteil, die Dichtelemente 24 sowie die Dichtungskappe auf die Stromschiene 8 bzw. auf die Leitung 10 aufgeschoben werden. Anschließend wird die elektrische Verbindung insbesondere durch Schweißen ausgebildet. Nachfolgend werden die Gehäuseteile 14A, 14B zueinander verschoben und miteinander verrastet. Zuletzt wird schließlich die Dichtungskappe 20 auf das eine Gehäuseteil 14B aufgeschoben und mit diesem verrastet. Insbesondere wenn die Dichtungselemente 24 einstückig mit dem jeweiligen Gehäuseteil 14A, 14B verbunden sind, so werden diese gemeinsam mit diesem verschoben. Dies ist insbesondere beim Gehäuseteil 14A auf Seiten der Stromschiene 8 der Fall. Im Ausführungsbeispiel ist das Dichtungselement 24 auf der Seite der Leitung 10 bevorzugt als ein loses Dichtungselement 24 ausgebildet, welches in das Gehäuseteil 14B eingeschoben und anschließend durch die Dichtungskappe 20 axial fixiert und insbesondere auch in Längsrichtung L komprimiert wird.

Das Gehäuse 14 weist jeweils im Bereich der Durchtrittsöffnungen 22 jeweils zumindest einen umlaufenden und durch einen Ringsteg gebildeten Axialanschlag 25 für das jeweilige Dichtelement 24 auf, an welchem sich dieses axial abstützt oder zumindest dessen Positionierung in Längsrichtung L festlegt.

Auf Seiten der Stromschienen 8 ist hierzu das Gehäuseteil 14A mit einem umlaufenden Vertikalsteg unmittelbar an der Durchtrittsöffnung 22 versehen. Auf Seiten der Leitung 10 ist im Ausführungsbeispiel ein äußerer Axialanschlag 25 durch die Dichtungskappe 20 verwirklicht. Ergänzend ist ein innerer Axialanschlag 25 durch einen umlaufenden Ringsteg an dem Gehäuseteil 14B ausgebildet.

Alternativ hierzu ist an dem Gehäuseteil 14B - ähnlich wie beim Gehäuseteil 14A - ein äußerer Axialanschlag 25 ausgebildet. Bei dieser Ausführungsvariante ist dann insbesondere auf die Dichtungskappe 20 verzichtet. Das Dichtelement 24 ist dann vorzugsweise einstückig mit dem Gehäuseteil 14B ausgebildet.

Die Dichtelemente 24 weisen jeweils radial innere sowie radial äußere Dichtflächen auf, die zumindest teilweise mit Dichtrippen oder Dichtlippen versehen sind.

Eine in FIG 4 dargestellte Anschlusskomponente 16 ist beispielsweise als die batterieseitige Anschlusskomponente 16B einer alternativen Verbindungsleitung (hier nicht näher dargestellt) ausgebildet, bei der der Anschluss dieser batterieseitigen Anschlusskomponente 16B nicht über eine flexible Leitung 10, sondern über Stromschienen 8 erfolgt.

Allgemein sind zwei Stromschienen 8 als Stromschienen-Paar einer Gleichstromleitung in das Anschlussgehäuse 18 eingeführt, und zwar jeweils über eine Einführöffnung 28. Die beiden Einführöffnungen 28 sind durch einen Trennsteg 27 voneinander getrennt.

Wie speziell anhand der Figur 5 zu erkennen ist, sind die beiden Stromschienen 8 in einem Endbereich jeweils an einem Kontaktterminal 29 insbesondere durch Schweißen angeschweißt. Die Kontaktterminals 29 sind im Ausführungsbeispiel L-förmig ausgebildet und weisen eine Kontaktlasche auf, die in einer Querrichtung Q senkrecht zur Längsrichtung L absteht. Die Breite und damit Ausdehnung des Kontaktterminals 29 in Querrichtung Q ist dabei größer als eine entsprechende Breite der Einführöffnung 28.

Weiterhin ist zu erkennen, dass innerhalb des Anschlussgehäuses 18 zumindest eine und vorzugsweise beide Stromschienen 8 in Querrichtung Q abgebogen ausgebildet sind, insbesondere derart, dass die beiden Kontaktterminals 29 in Längsrichtung L fluchtend hintereinander angeordnet sind. Die beiden Kontaktterminals 29 sowie die beiden Stromschienen 8 liegen im Ausführungsbeispiel in getrennten Gehäusebereichen des Anschlussgehäuses 18 ein, die durch Trennwände des Anschlussgehäuses 18 voneinander getrennt sind.

Das Anschlussgehäuse 18 ist entlang einer horizontalen Teilungsebene in ein unteres Gehäuseteil, vorliegend als unteres Aufnahmeteil 18A bezeichnet, sowie in einen oberen, flachen Deckel 18B asymmetrisch unterteilt. Die horizontale Teilungsebene wird von der Längsrichtung L und der Querrichtung Q aufgespannt. Die Querrichtung Q ist dabei senkrecht zu den Flachseiten der als Flachleiter ausgebildeten Stromschienen 8 orientiert, bildet daher eine Flächennormale dieser Flachseiten. Diese Flachseiten der Stromschienen 8 erstrecken sich allgemein in Längsrichtung L sowie ergänzend in einer Vertikalrichtung V.

Durch die wie beschrieben ausgebildete horizontale Teilungsebene werden die Stromschienen 8 quasi vertikal in das Anschlussgehäuse 18 eingeführt. Die Einführöffnungen 28 sind daher vertikal orientiert und erstrecken sich in Richtung zum Deckel 18B. Eine jede der Einführöffnung 28 ist daher bei abgenommenen Deckel 18B nach oben hin offen, sodass eine jeweilige Stromschiene 8 insbesondere gemeinsam mit dem daran angeschlossenen Kontaktterminal 29 von oben in das Aufnahmeteil 18A eingelegt werden kann.

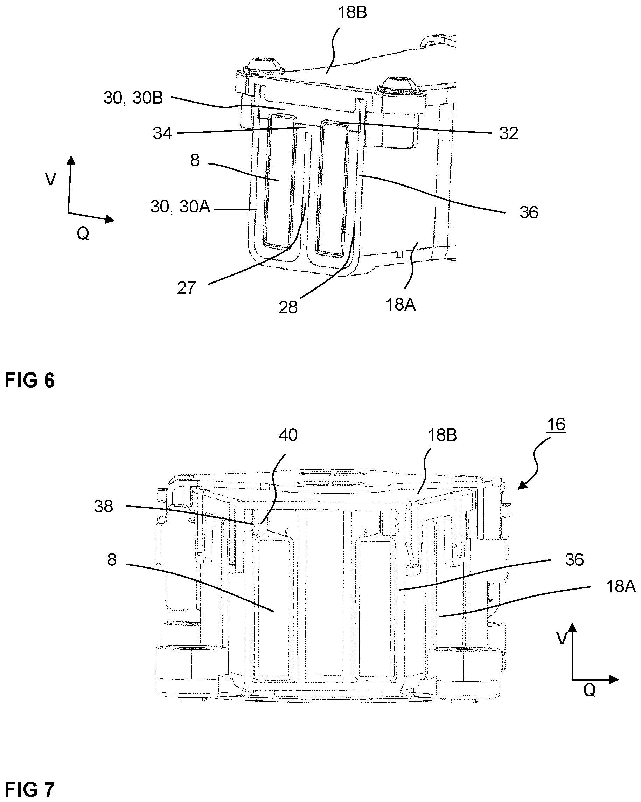

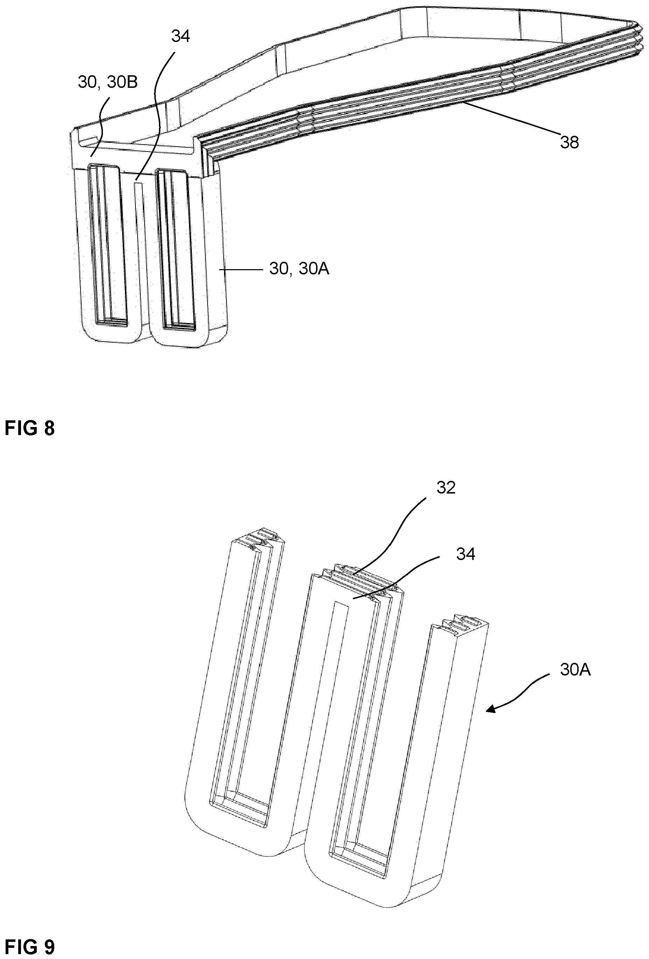

Die Stromschienen 8 liegen abgedichtet in den Einführöffnungen 28 ein. Aufgrund der horizontalen Teilungsebene ist hierzu ein geteiltes Dichtelement 30 vorgesehen, wie es insbesondere in FIG 6 sowie FIG 8 dargestellt ist. Diese weist einen unteren Aufnahmeabschnitt 30A sowie einen oberen Deckelabschnitt 30B auf, die im montierten Zustand, also bei geschlossenem Anschlussgehäuse 18 mit Dichtflächen 32 aneinander dichtend anliegen. Der Aufnahmeabschnitt 30A weist zumindest einen U-förmiger Bereich auf, welcher also nach oben hin offen ist und in dem eine jeweilige Stromschiene 8 aufgenommen wird. Die beiden U-Schenkel verlaufen dabei parallel zu den Flachseiten der Stromschiene 8.

Grundsätzlich besteht die Möglichkeit, dass für jede Einführöffnung 28 jeweils ein geteiltes Dichtelement 30 eingesetzt wird. Im Ausführungsbeispiel ist jedoch ein gemeinsames, geteiltes Dichtelement 30 für die beiden Einführöffnungen 28 vorgesehen. Der Aufnahmeabschnitt 30A weist daher insgesamt zwei nebeneinander angeordnete, U-förmige Abschnitte auf, die zudem im Mittenbereich durch einen Verbindungssteg 34 miteinander verbunden sind. Der Deckelabschnitt 30B überdeckt daher beide Einführöffnungen 28.

Das Aufnahmeteil 18A weist in Vertikalrichtung V insgesamt eine Höhe auf, die derart bemessen ist, dass eine jeweilige Stromschiene 8 vollständig in diesem unteren Gehäuseteil aufgenommen ist. Dies ist insbesondere anhand der FIG 6 sowie FIG 7 gut zu erkennen. Die äußeren Gehäusewände 36 des Aufnahmeteils 18A erstrecken sich bis zum oberen Ende der Stromschienen 8 und im Ausführungsbeispiel sogar über diese hinaus.

Demgegenüber erstreckt sich der Trennsteg 27 lediglich bis zu einer geringeren Höhe, um die W-förmige Ausgestaltung des Aufnahmeabschnitt 30A zu ermöglichen.

Wie insbesondere anhand FIG 6 zu entnehmen ist, ist der Deckelabschnitt 30B insgesamt flach ausgebildet, weist also lediglich eine geringe Höhe auf. Bevorzugt ist seine Ausdehnung in Querrichtung Q größer als eine Ausdehnung in Vertikalrichtung V.

Allgemein erstreckt sich das Anschlussgehäuse in Längsrichtung L, Querrichtung Q und Vertikalrichtung V, die senkrecht aufeinander stehen. Die Querrichtung Q erstreckt sich von einer äußeren Gehäusewand 36 zu der gegenüberliegenden Gehäusewand 36. Die Vertikalrichtung V ist vom Aufnahmeteil 18A in Richtung zum Deckel 18B orientiert und die Längsrichtung L ist durch die Längsrichtung L der Stromschiene 8 im Bereich der Einführöffnung 28 gebildet.

An seiner zur jeweiligen Stromschiene 8 orientierten Unterseite weist der Deckelabschnitt 30B lediglich eine geringe Einbuchtung auf, in die im montierten Zustand die Stromschiene 8 eintaucht. In dieser Einbuchtung wird jedoch lediglich ein oberster Abschnitt der Stromschiene 8 aufgenommen und zwar insbesondere der Randabschnitt, welcher über eine Rundung in die Flachseiten übergeht. Die Tiefe der Einbuchtung in Vertikalrichtung V ist insbesondere geringer als 5 % der Ausdehnung der Stromschiene 8 in Vertikalrichtung V.

In Vertikalrichtung V weist der Deckelabschnitt 30B eine Dicke auf. Der in Vertikalrichtung V überstehende Teilbereich der Außenwände des Aufnahmeteils 18A erstreckt sich im Ausführungsbeispiel zumindest oder genau bis zu einem oberen Rand des Deckelabschnitts 30B.

Wie insbesondere anhand FIG 8 zu erkennen ist, ist der Deckelabschnitt 30B einstückiger Bestandteil einer umlaufenden Deckeldichtung 38, die also den Deckel 18B gegenüber dem Aufnahmeteil 18A umlaufend abdichtet.

Die gesamte Deckeldichtung 38 weist in Vertikalrichtung V vorzugsweise eine maximale Höhe auf, die auch im Bereich des Deckelabschnitts 30B vorzugsweise nicht überschritten wird. Bevorzugt weist der Deckelabschnitt 30B eine ausreichende Höhe auf, so dass er zumindest gerundeten Eckbereiche der Stromschiene 8 überdeckt. Die Teilungsebene zwischen den beiden Abschnitten 30A, 30B liegt daher bevorzugt etwas unterhalb der gerundeten Eckbereiche und damit in geradlinig verlaufenden Teilbereichen der Stromschiene 8. Bei Bedarf und falls erforderlich kann die Höhe der des Deckelabschnitts 30B daher auch etwas höher sein, zumindest das untere Ende etwas tiefer liegen als die restliche Deckeldichtung 38. Wie sowohl der FIG 8 als auch der FIG 6 zu entnehmen ist, weist der Deckelabschnitt 30B an seiner oberen Seite im Ausführungsbeispiel eine Einbuchtung mit verringerter Dicke auf, welche durch zwei randseitige nach oben in Vertikalrichtung V orientierte Stege begrenzt ist, welche dann in die umlaufende restliche Deckeldichtung 38 übergehen bzw. Teilstück derselben sind (vergleiche hierzu insbesondere auch FIG 8).

Die Deckeldichtung 38 weist - wie insbesondere anhand FIG 7 zu erkennen ist - im Querschnitt betrachtet vertikal orientierte Dichtflächen auf, die dichtend zwischen dem Deckel 18B und dem Aufnahmeteil 18A angeordnet sind. Zumindest einseitig sind an diesen Dichtflächen Rippen oder Dichtlippen ausgebildet. Wie speziell anhand FIG 7 zu erkennen ist, weist der Deckel einen nach unten orientierten Vertikalsteg 40 auf und die Deckeldichtung 38 ist zwischen diesem Vertikalsteg 40 und einer jeweiligen äußeren Gehäusewand 36 angeordnet. Dieser Vertikalsteg 40 erstreckt sich bevorzugt bis auf einen erforderlichen Toleranzspalt bis zur Stromschiene 8.

Die Ausgestaltung des W-förmigen Aufnahmeabschnitt 30A ist gut anhand FIG 8 zu erkennen. Insbesondere ist hierbei auch zu erkennen, dass die zum Deckelabschnitt 30B orientierten Dichtflächen 32 jeweils mit Rippen oder Dichtlippen versehen sind. Weiterhin sind derartige Dichtlippen in Richtung zur Stromschiene 8 ausgebildet. Zwischen den beiden U-förmigen Abschnitten ist ein Abstand und Zwischenbereich ausgebildet, welcher zur Aufnahme des Trennstegs 27 dient. Dieser freie Zwischenbereich wird über den Verbindungssteg 34 überbrückt. Durch diese einteilige Ausbildung des Aufnahmeabschnitts 30A zur Aufnahme beider Stromschienen 8 ist eine besonders robuste Ausgestaltung erzielt. Insbesondere in Ergänzung mit dem gemeinsamen Deckelabschnitt 30B, welcher sich an den gegenüberliegenden randseitigen Stirnflächen sowie ergänzend an den Verbindungs-abschnitt 34 abstützt, ist zudem eine zuverlässige Abdichtung trotz der Teilung des geteilten Dichtelements 30 erreicht.

Allgemein ist in bevorzugter Ausgestaltung auf zusätzliche Dichtmaßnahmen verzichtet und die Abdichtung des Anschlussgehäuses 18 insbesondere auch im Bereich der Einführöffnung 28 erfolgt allein durch das geteilte Dichtelement 30 in Verbindung mit der Deckeldichtung 38, die bevorzugt einstückig mit dem Deckelabschnitt 30B ausgebildet ist. Alternativ kann eine separate Deckeldichtung 38 in Ergänzung zu einem separaten Deckelabschnitt 30B ausgebildet sein.

### Bezugszeichenliste

- 2: Verbindungsleitung
- 4: starre Abschnitt
- 6: flexible Abschnitt
- 8: Stromschiene
- 10: flexible Leitung
- 12: Verbindungsstelle
- 14: Gehäuse
- 14A, B: Gehäuseteile
- 16, 16A, B: Anschlusskomponente
- 18: Anschlussgehäuse
- 18A: Aufnahmeteil
- 18B: Deckel
- 20: Dichtungskappe
- 22: Durchtrittsöffnung
- 24: Dichtelement
- 25: Axialanschlag
- 26: Gehäusedichtung
- 27: Trennsteg
- 28: Einführöffnung
- 29: Kontaktterminal
- 30: geteiltes Dichtelement
- 30A: Aufnahmeabschnitt
- 30B: Deckelabschnitt
- 32: Dichtflächen
- 34: Verbindungssteg
- 36: äußere Gehäusewand
- 38: Deckeldichtung
- 40: Vertikalsteg
- L: Längsrichtung
- Q: Querrichtung
- V: Vertikalrichtung

## Patentansprüche

1. Anschlusskomponente (16) für eine Stromschienenanordnung mit zumindest einer sich in einer Längsrichtung (L) erstreckenden Stromschiene (8), wobei die Anschlusskomponente (16) ein Anschlussgehäuse (18) mit zumindest einer Einführöffnung (28) für die zumindest eine Stromschiene (8) aufweist, durch die die zumindest eine Stromschiene (8) im montierten Zustand abgedichtet eingeführt ist, **dadurch gekennzeichnet, dass** das Anschlussgehäuse (18) entlang einer horizontalen Teilungsebene in einen Deckel (18B) und ein Aufnahmeteil (18A) unterteilt ist, wobei sich die horizontale Teilungsebene in Längsrichtung (L) sowie in Querrichtung (Q) senkrecht zu einer Flachseite der Stromschiene (8) erstreckt und wobei in der Einführöffnung (28) ein geteiltes Dichtelement (30) einliegt, welches einen Deckelabschnitt (30B) sowie einen Aufnahmeabschnitt (30A) aufweist.

2. Anschlusskomponente (16) nach dem vorhergehenden Anspruch, **dadurch gekennzeichnet, dass** das Anschlussgehäuse (18) entlang der horizontalen Teilungsebene asymmetrisch geteilt ist und der Deckel (18B) flach und das Aufnahmeteil (18A) tief ausgeführt ist, insbesondere derart, dass die Flachschiene vollständig im Aufnahmeteil (18A) aufgenommen ist und nicht übersteht, und dass korrespondierend das geteilte Dichtelement (30) asymmetrisch geteilt ist, so dass im montierten Zustand der Aufnahmeabschnitt (30A) die zumindest eine Stromschiene (8) an den Flachseiten zumindest weitgehend umgreift und der Deckelabschnitt (30B) flach ausgebildet ist.

3. Anschlusskomponente (16) nach einem der beiden vorhergehenden Ansprüche, **dadurch gekennzeichnet, dass** der Deckelabschnitt (30B) ein Teilstück einer umlaufenden Deckeldichtung (38) ist, welche vollständig umlaufend zwischen Deckel (18B) und Aufnahmeteil (18A) verläuft, wobei in bevorzugter Ausgestaltung der Deckelabschnitt (30B) in einer Vertikalrichtung (V) eine Dicke aufweist, die konstant ist und / oder die nicht größer als eine Dicke der umlaufenden Deckeldichtung (38) im restlichen Bereich ist.

4. Anschlusskomponente (16) nach einem der Ansprüche 1 bis 3, **dadurch gekennzeichnet, dass** sie für zwei Stromschienen (8) ausgebildet ist, welche durch zwei durch einen Trennsteg (27) voneinander getrennte Einführöffnungen (28) geführt ist, wobei ein W-förmiger Aufnahmeabschnitt (30A) ausgebildet ist, welcher die Flachseiten der beiden Stromschienen (8) umgibt und den Trennsteg (27) überdeckt.

5. Anschlusskomponente (16) nach einem der Ansprüche 1 bis 4, **dadurch gekennzeichnet, dass** zumindest einer der Teile des geteilten Dichtelements (30) eine konturierte Dichtfläche (32) aufweist, die bei geschlossenem Anschlussgehäuse (18) an dem anderen Teil des geteilten Dichtelements (30) anliegt, wobei die Dichtfläche (32) hierzu insbesondere Rippen oder Dichtlippen aufweist.

6. Elektrische Verbindungsleitung (2) für ein Fahrzeug zur elektrischen Verbindung zweier elektrischer Komponenten, wobei die Verbindungsleitung (2) unterteilt ist in einen starren Abschnitt (4) mit zumindest einer starren Stromschiene (8) und einen flexiblen Abschnitt (6) mit zumindest einer flexiblen Leitung (10), wobei genau eine jeweilige Stromschiene (8) an einer Verbindungsstelle (12) mit genau einejeweiligen Leitung (10) elektrisch verbunden ist und die zumindest eine Stromschiene (8) sowie die zumindest eine flexible Leitung (10) bevorzugt jeweils einen Isolationsmantel aufweisen, **dadurch gekennzeichnet, dass** die Verbindungsstelle (12) in einem freien Innenraum eines mehrteiligen, und zumindest zwei Gehäuseteile (14A, 14B) aufweisenden Gehäuses (14) abgedichtet eingehaust ist, wobei die zumindest eine Stromschiene (8) sowie die zumindest eine Leitung (10) jeweils einzelweise mit Hilfe eines jeweiligen Dichtelements (24) abgedichtet in das Gehäuse (14) und zur Verbindungsstelle (12) geführt sind.

7. Verbindungsleitung (2) nach dem vorhergehenden Anspruch, **dadurch gekennzeichnet, dass** sie jeweils mehrere, insbesondere zwei starre Stromschienen (8) sowie zwei flexible Leitungen (10) aufweist, die jeweils an einer jeweiligen Verbindungsstelle (12) verbunden sind und jede Verbindungsstelle (12) in jeweils einem mehrteiligen Gehäuse (14) angeordnet ist.

8. Verbindungsleitung (2) nach einem der vorhergehenden Ansprüche, **dadurch gekennzeichnet, dass** in dem Gehäuse (14) außer Dichtelementen (24) keine weiteren Bauteile angeordnet sind.

9. Verbindungsleitung (2) nach einem der vorhergehenden Ansprüche, **dadurch gekennzeichnet, dass** zumindest eines der Dichtelemente (24) gemeinsam mit dem Gehäuseteil (14A, 14B) als ein Mehrkomponenten-Spritzgussteil ausgebildet ist.

10. Verbindungsleitung (2) nach einem der vorhergehenden Ansprüche, **dadurch gekennzeichnet, dass** das Gehäuse (14) entlang einer vertikalen Teilungsebene in zwei Gehäuseteilen (14A, 14B) unterteilt ist, zwischen denen eine umlaufende Gehäusedichtung (26) angeordnet ist.

11. Verbindungsleitung (2) nach einem der vorhergehenden Ansprüche, **dadurch gekennzeichnet, dass** jedes Gehäuseteil (14A, 14B) eine Durchtrittsöffnung (22) für die jeweilige Stromschiene (8) bzw. die flexible Leitung (10) aufweist und die jeweilige Durchtrittsöffnung (22) über ein jeweiliges Dichtelement (24) abgedichtet ist.

12. Verbindungsleitung (2) nach einem der vorhergehenden Ansprüche, **dadurch gekennzeichnet, dass** im Bereich zumindest einer der Durchtrittsöffnungen (22) eine Dichtungskappe (20) angeordnet ist, welche mit dem einen Gehäuseteil (14A, 14B) verbunden ist und durch die die flexible Leitung (10) oder die Stromschiene (8) geführt ist.

13. Verbindungsleitung (2) nach einem der vorhergehenden Ansprüche, **dadurch gekennzeichnet, dass** sie als eine Hochleistungs-Leitung, insbesondere als eine Batterieleitung oder Hochvoltleitung ausgebildet ist, die an ihren Endseiten jeweils eine Anschlusskomponente (16, 16A, 16B) zum Anschluss an die jeweilige Komponente aufweist, wobei die zumindest eine Stromschiene (8) sowie die zumindest eine flexible Leitung (10) jeweils einen Isolationsmantel aufweisen und sich jeweils ausgehend von der Verbindungsstelle (12) bis zu der jeweiligen Anschlusskomponenten (16A, 16B) erstrecken, die jeweils ein Anschlussgehäuse (18) aufweist, in welches die Stromschiene (8) bzw. die flexible Leitung (12) abgedichtet eingeführt ist, wobei im jeweiligen Anschlussgehäuse (18) bevorzugt ein Kontaktterminal (29) einliegt.

14. Verbindungsleitung (2) nach einem der vorhergehenden Ansprüche, **dadurch gekennzeichnet, dass** sie zur elektrischen Verbindung einer Batterie mit einer Ladedose ausgebildet ist, wobei die zumindest eine Stromschiene (8) vorzugsweise gebogen ausgebildet ist.

15. Verfahren zur Herstellung einer Anschlusskomponente (16) nach einem der Ansprüche 1 bis 5 oder zur Herstellung einer elektrischen Verbindungsleitung (2) nach einem der Ansprüche 6 bis 14, bei dem
a) im Falle der Anschlusskomponente (16) zunächst an einem Endbereich der Stromschiene (8) ein Kontaktterminal (29) angebracht, insbesondere angeschweißt wird, und anschließend die Stromschiene (8) mit dem daran angebrachten Kontaktterminal (29) in den Aufnahmeteil (18A) von oben bei geöffnetem Anschlussgehäuse (18) eingelegt wird,
b) im Falle der Verbindungsleitung (2) zunächst ein jeweiliges Gehäuseteil (14A, 14B) mit dem jeweiligen Dichtelement (24) auf die jeweilige Stromschiene (8) sowie die jeweilige flexible Leitung (10) aufgeschoben wird, anschließend die Stromschiene (8) mit der flexiblen Leitung (10) insbesondere durch Schweißen elektrisch leitend verbunden werden und anschließend die Gehäuseteile (14A, 14B) entlang der Stromschiene (8) bzw. der flexiblen Leitung (10) verschoben und miteinander verbunden werden.
